# EUROPÄISCHE PATENTSCHRIFT

(11) **EP 1 108 615 B1**
(45) Veröffentlichungstag und Bekanntmachung des Hinweises auf die Patenterteilung: **02.01.2004**
(21) Anmeldenummer: 00127025.5
(22) Anmeldetag: 09.12.2000
(51) Int. Cl.: B60R 9/06

(54) **Hecklastenträger zur Montage an einem Kraftfahrzeug**
Load carrier to be mounted at the rear of a vehicle
Dispositif porte-charge monté à l'arrière d'un véhicule

(30) Priorität: 16.12.1999 DE 29922120 U
(43) Veröffentlichungstag der Anmeldung: 20.06.2001
(73) Patentinhaber: EUFAB Handelsgesellschaft für Auto- und Zweiradzubehör mbH, 42781 Haan (DE)
(72) Erfinder: Schuth, Klemens, 56218 Mülheim-Kärlich (DE)
(74) Vertreter: Paul, Dieter-Alfred, Dipl.-Ing.

(56) Entgegenhaltungen:
- EP-A- 0 710 588
- WO-A-92/12027
- WO-A-98/09841
- WO-A-99/54169
- DE-A- 19 716 670
- FR-A- 2 684 056
- FR-A- 2 688 178
- NL-A- 8 402 794
- US-A- 4 412 635

## Beschreibung

Die vorliegende Erfindung betrifft einen Hecklastenträger zur Montage an einem Kraftfahrzeug mit einem Tragrahmen, der eine Anschlußeinrichtung zur Befestigung an einer fahrzeugseitigen Anhängerkupplung aufweist, wobei die Anschlußeinrichtung einen Anschlußkörper, der eine Aufnahme für einen Anschlußkopf der fahrzeugseitigen Anhängerkupplung bildet, und Haltemittel, um den in der Aufnahme positionierten Anschlußkopf in der Aufnahme zu fixieren, aufweist.

Im Stand der Technik sind verschiedene Formen von Hecklastenträgern für die Befestigung am Fahrzeugheck eines Kraftfahrzeugs bekannt. Sie weisen in der Regel einen Tragrahmen auf, der Halteelemente für die Halterung von beispielsweise Fahrrädern besitzt. Der Tragrahmen hat Abstützrahmenteile, über die er sich an verschiedenen Punkten des Fahrzeughecks abstützen kann.

Die Befestigung des Hecklastenträgers am Fahrzeugheck geschieht auf unterschiedliche Weise. So ist bekannt (vgl. US-PS 4 513 897, US-PS 4 394 948, US-PS 3 841 440, US-PS 3 927 810), hierfür ein Spannriemensystem vorzusehen. Dieses Spannriemensystem besteht aus einer Mehrzahl von Spannriemen, die an ihrem freien Ende Spannhaken aufweisen, welche dazu bestimmt sind Fahrzeugkanten, beispielsweise Kanten von Kofferraumklappen oder Stoßfängern, zu hinterfassen. Das Spannriemensystem verspannt den Hecklastenträger so, daß er unter Vorspannung mit Hilfe der Abstützrahmenteile auf der Heckklappe und teilweise auch auf den Heckstoßfängern des Kraftfahrzeugs aufliegt und so fixiert ist.

Aus der DE-U 93 03 486.5 ist ein weiterer Hecklastenträger bekannt, der zur Befestigung einer Heckklappe zwei Haltestreben aufweist, die im oberen Bereich des Tragrahmens angelenkt sind und an ihren freien Enden Befestigungseinrichtungen aufweisen, die hinter die Oberkante der Heckklappe fassen können. Auf der gleichen Schwenkachse, über die die Haltestreben an den Tragrahmen angelenkt sind, sitzen Abstützstreben, die ebenfalls schwenkbar sind und die an ihren freien Enden Abstützelemente zwecks Abstützung auf der Heckklappe, vorzugsweise auf einer Knickkante der Heckklappe, aufweisen. Die Abstützstreben und Haltestreben bilden jeweils stabile Dreiecke, an denen der Tragrahmen in an der Heckklappe montiertem Zustand um eine horizontale Achse schwenkbar aufgehängt ist.

Die freien unteren Enden des Tragrahmens sind ebenfalls mit Befestigungseinrichtungen versehen, die in montiertem Zustand die Unterkante der Heckklappe umfassen und auf diese Weise den Tragrahmenfestenlegen. Zusätzlich sind in diesem Bereich Stützstreben schwenkbar angelenkt, welche derart längenverstellbar sind, daß sich nach der Montage eine zusätzliche Abstützung des Tragrahmens auf der Oberseite der Stoßstange des Kraftfahrzeugs ergibt.

Schließlich sind Hecklastenträger bekannt, die an ihrem Tragrahmen eine Anschlußeinrichtung aufweisen, um den Hecklastenträger an dem Anschlußkopf einer fahrzeugseitigen Anhängerkupplung zu fixieren. Diese Hecklastenträger weisen zusätzlich Befestigungseinrichtungen und Haltestreben auf, um den Tragrahmen an der Heckklappe und/oder der Heckstoßstange eines Kraftfahrzeugs zu fixieren und abzustützen.

Ein gattungsgemässer Hacklastenträger ist aus EP-A-0 710 588 bekannt.

Die vorbekannten Hecklastenträger sind in ihrem Aufbau vergleichsweise kompliziert und teilweise nicht einfach zu montieren. Insbesondere gestaltet sich die Montage an der Anhängerkupplung nicht einfach.

Aufgabe der Erfindung ist es daher, einen Hecklastenträger der eingangs genannten Art derart auszubilden, daß er einfach zu montieren ist.

Diese Aufgabe wird erfindungsgemäß dadurch gelöst, daß als Haltemittel ein offener Haltering vorgesehen ist, der in eine die Aufnahme umgebende und zu dieser offene Ausnehmung eingelegt ist und mittels einer Betätigungseinrichtung zwischen einer Klemmstellung, in der er in die Aufnahme hineinragt, um den Anschlußkopf zu fixieren, und einer Einschubstellung, in der er gegenüber der Klemmstellung derart aufgeweitet ist, daß der Anschlußkopf in die Aufnahme eingesetzt oder aus dieser entfernt werden kann, elastisch verformbar ist. Erfindungsgemäß erfolgt somit die Fixierung des Hecklastenträgers durch den Haltering, der durch die Betätigungseinrichtung gegen den Anschlußkopf der fahrzeugseitigen Anhängerkupplung gedrückt werden kann, um diesen zu fixieren. Der Haltering ist dabei so positioniert, daß er den Anschlußkopf der Anhängerkupplung in dessen unterer Hälfte kontaktiert, d.h. untergreift und vorzugsweise zusätzlich festklemmt.

Um die erforderlichen hohen Haltekräfte in dem Haltering zu erzeugen, ist die Betätigungseinrichtung vorzugsweise als Hebelmechanismus ausgebildet. Dieser Hebelmechanismus greift vorzugsweise an den Endabschnitten des offenen Halterings an, die hierzu im wesentlichen radial aus dem Anschlußkörper herausgebogen sind. Dabei greift die Betätigungseinrichtung vorzugsweise an dem einen Endabschnitt des Halterings an, während der zweite Endabschnitt an einer Anschlagfläche des Anschlußkörpers abgestützt ist. Die Anschlagfläche kann hierbei an einem Anschlagelement ausgebildet sein, der zur Einstellung der Haltekraft des Halterings verstellbar in dem Anschlußkörper gehalten und zum Beispiel mittels einer Stellschraube positionierbar ist.

Der Hebelmechanismus kann in unterschiedlicher Weise ausgebildet sein. Gemäß einer ersten Ausführungsform ist vorgesehen, daß die Betätigungseinrichtung einen Betätigungshebel aufweist, der an seinem einen Endbereich an dem Anschlußkörper oder anschlußkörpernah an einem tragrahmenfesten Bauteil angelenkt ist und einen Ansatz trägt, der im wesentlichen unbeweglich mit dem Betätigungshebel verbunden ist und eine Kontaktfläche besitzt, die mit dem ersten Endabschnitt des Halterings in Kontakt bringbar ist und diesen bei einer Schwenkbewegung des Betätigungshebels in einer Richtung zu dem zweiten Endabschnitt hin drückt, um den Haltering in seine Klemmstellung zu bringen. Dabei kann der Ansatz an dem Betätigungshebel angeschraubt und durch einen weiteren am Betätigungshebel fixierten Hebel gegen Verdrehen gesichert sein.

Gemäß einer alternativen Ausführungsform ist vorgesehen, daß die Betätigungseinrichtung einen Betätigungshebel, der an seinem einen Endbereich am Anschlußkörper oder anschlußkörpernah an einem tragrahmenfesten Bauteil angelenkt ist, einen Klemmhebel, der an seinem einen Ende eine Ausnehmung aufweist, in die der erste Endabschnitt des Halterings eingreift, und im Bereich seines anderen Endes an einem tragrahmenfesten Bauteil schwenkbar gehalten ist, und einen Zwischenhebel, der den Betätigungshebel und den Klemmhebel gelenkig derart miteinander verbindet, daß bei einer Schwenkbewegung des Betätigungshebels in der einen Richtung der erste Endabschnitt des Halterings in Richtung des zweiten Endabschnitts gedrückt wird, um den Haltering in seine Klemmstellung zu bringen. Diese Ausführungsform ist zwar etwas komplizierter als die erste Alternative, bietet jedoch den Vorteil, daß durch entsprechende Wahl der Übersetzungsverhältnisse die Umsetzung der Schwenkbewegung des Betätigungshebels in die Bewegung des Klemmhebels vorgegeben werden kann. Hierdurch wird unter anderem die Möglichkeit eröffnet, einen flächigen Kontakt zwischen der Wandung der Ausnehmung in dem Klemmhebel und den darin eingreifenden ersten Endabschnitt des Halteelements über einen weiten Schwenkbereich des Betätigungshebels sicherzustellen.

In Ausbildung dieser Ausführungsform ist vorgesehen, daß der Klemmhebel an einem Stellelement schwenkbar angebracht ist, das wiederum verstellbar an einem mit dem Anschlußkörper verbundenen Grundkörper gehalten ist, um die Haltekraft des Halterings einzustellen.

In bevorzugter Weise sind die Hebel der Betätigungseinrichtung im wesentlichen in vertikaler Richtung verschwenkbar, wodurch die Anordnung platzsparend wird.

Hinsichtlich weiterer vorteilhafter Ausgestaltungen der Erfindung wird auf die Unteransprüche sowie auf die nachfolgende Beschreibung von Ausführungsbeispielen der Erfindung unter Bezugnahme auf die beiliegende Zeichnung verwiesen. In der Zeichnung zeigt
- Figur 1: in Schnittansicht eine erste erfindungsgemäß ausgebildete Anschlußeinrichtung zur Fixierung eines Hecklastenträgers an einem Kraftfahrzeug,
- Figur 2: die Anschlußeinrichtung aus Figur 1 im Querschnitt durch einen Anschlußkörper,
- Figur 3: eine zweite Ausführungsform einer erfindungsgemäß ausgebildeten Anschlußein richtung in geschnittener Draufsicht und
- Figur 4: die Anschlußeinrichtung aus Figur 3 in Seitenansicht.

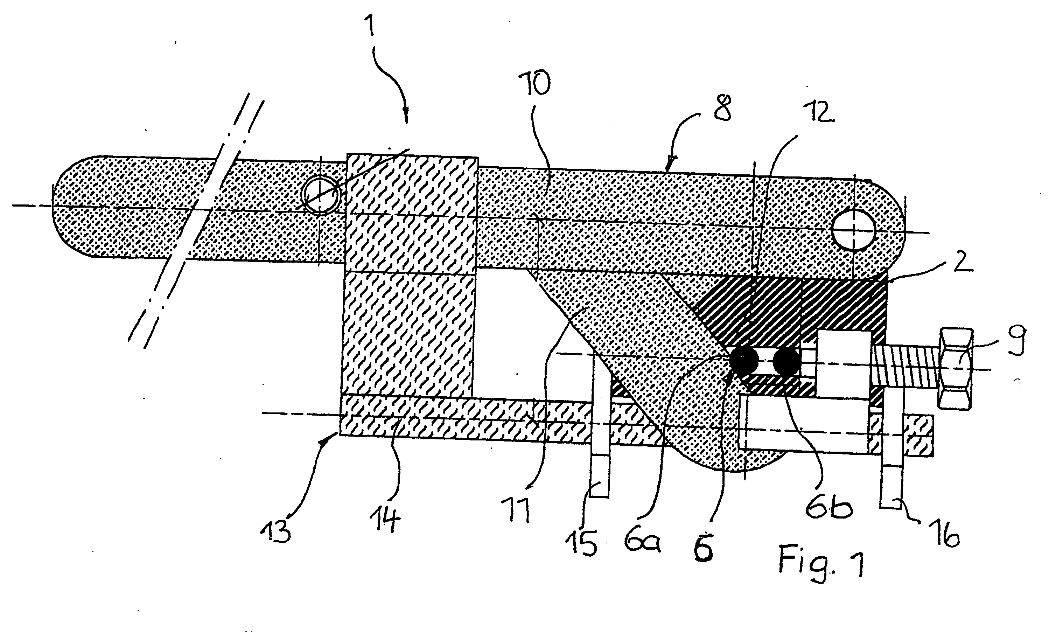

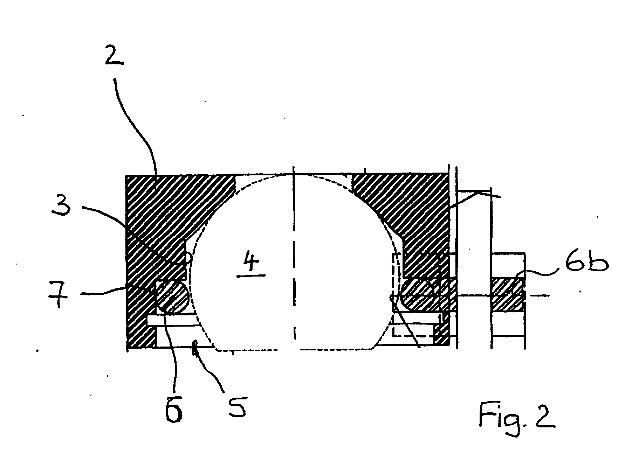

In den Figuren 1 und 2 ist eine erste Ausführungsform einer Anschlußeinrichtung 1 dargestellt, die dazu dient, einen ansonsten nicht näher dargestellten Hecklastenträger mit einem Tragrahmen an einer Anhängerkupplung eines Kraftfahrzeugs heckseitig anzubringen. Die Anschlußeinrichtung 1 umfaßt einen Anschlußkörper 2, der an dem Tragrahmen des Hecklastenträgers fixiert ist und eine Aufnahme 3 für den Anschlußkopf 4 einer Anhängerkupplung bildet, welche an ihrer Unterseite eine Öffnung 5 aufweist.

Zur Fixierung des Anschlußkopfes 4 in der Aufnahme 3 ist ein offener Haltering 6 aus Metall vorgesehen, der in eine zur Aufnahme 3 hin offene Ausnehmung 7 des Anschlußkörpers 2 eingelegt und darin mittels eines nicht dargestellten Sprengrings fixiert ist. Der Haltering 6 besitzt im unbelasteten Zustand - der Einschubstellung - einen Innendurchmesser, der größer als der Durchmesser des Anschlußkopfes 4 ist, so daß der Anschlußkörper 2 auf den Anschlußkopf 4 aufsetzbar ist. Die Endabschnitte 6a, 6b des offenen Hälterings 6 sind im wesentlichen radial aus dem Anschlußkörper 2 herausgebogen und verlaufen etwa parallel zueinander. Sie können zur Fixierung des Anschlußkopfes 4 aus der Einschubstellung in eine Klemmstellung elastisch zusammengedrückt werden, in der der Haltering 6 gegen den Anschlußkopf 4 gepreßt wird und diesen fixiert. Wie in Figur 2 gut erkennbar ist, ist die Ausnehmung 7 so positioniert, daß der Haltering 6 nahe der Öffnung 5 des Anschlußkörpers 2 in Kontakt mit dem Anschlußkopf 4 kommt und diesen so untergreift.

Zum Zusammendrücken des Halterings 6 ist ein Hebelmechanismus 8 vorgesehen, der an dem ersten Endabschnitt 6a des Halterings angreift, während der zweite Endabschnitt 6b an einem Anschlag 9 abgestützt ist. Der Anschlag 9 wird hier von einer Schraube gebildet, die in den Anschlußkörper 2 eingeschraubt ist. Der Hebelmechanismus 8 umfaßt einen in vertikaler Richtung schwenkbaren Betätigungshebel 10, der an seinem enden Endbereich an dem Anschlußkörper 2 angelenkt ist und einen Ansatz 11 trägt, der im wesentlichen unbeweglich mit dem Betätigungshebel 10 verbunden ist und eine Kontaktfläche 12 besitzt, die an dem ersten Endabschnitt 6a des Halterings anliegt.

Die Figur 1 zeigt den Hebelmechanismus 8 in seiner der Klemmstellung des Halterings 6 entsprechenden abgesenkten horizontalen Lage, in welcher der erste Endabschnitt 6a des Halterings 6 durch die den Ansatz 11 gegen den am Anschlag 9 abgestützten zweiten Endabschnitt 6a gedrückt ist. Wenn der Betätigungshebel 10 aus dieser Stellung im Uhrzeigersinn hochgeschwenkt wird, gibt der Ansatz 11 den ersten Endabschnitt 6a des Halterings 6 frei, so daß sich der Haltering 6 wieder aufweiten und somit der Anschlußkörper 2 nach oben von dem Anschlußkopf 4 der Anhängerkupplung abgezogen werden kann.

Die Haltekraft des Halterings 6 kann verändert werden, indem die Schraube 9 in den Anschlußkörper 2 hinein und aus diesem herausgedreht wird. Je weiter sie in den Anschlußkörper 2 hineingedreht ist, desto enger liegen die Endabschnitte 6a, 6b in der Klemmstellung zusammen und desto größer ist entsprechend die erzeugte Klemmkraft.

Um zu verhindern, daß sich der Anschlußkörper 2 versehentlich von dem Anschlußkopf 4 löst, ist eine Sicherungseinrichtung 13 vorgesehen, die dazu dient, den Betätigungshebel 10 in der in Figur 1 dargestellten abgesenkten Stellung zu fixieren. Die Sicherungseinrichtung 13 umfaßt einen Riegel 14, der an dem Betätigungshebel 10 verschiebbar geführt ist und in der abgesenkten Hebelstellung in die Öffnungen von zwei an der Unterseite des Anschlußkörpers 2 vorgesehenen Ansätzen 15, 16 geschoben werden kann, um auf diese Weise ein ungewolltes Hochschwenken des Beätigungshebels 10 zu verhindern (vgl. Figur 1).

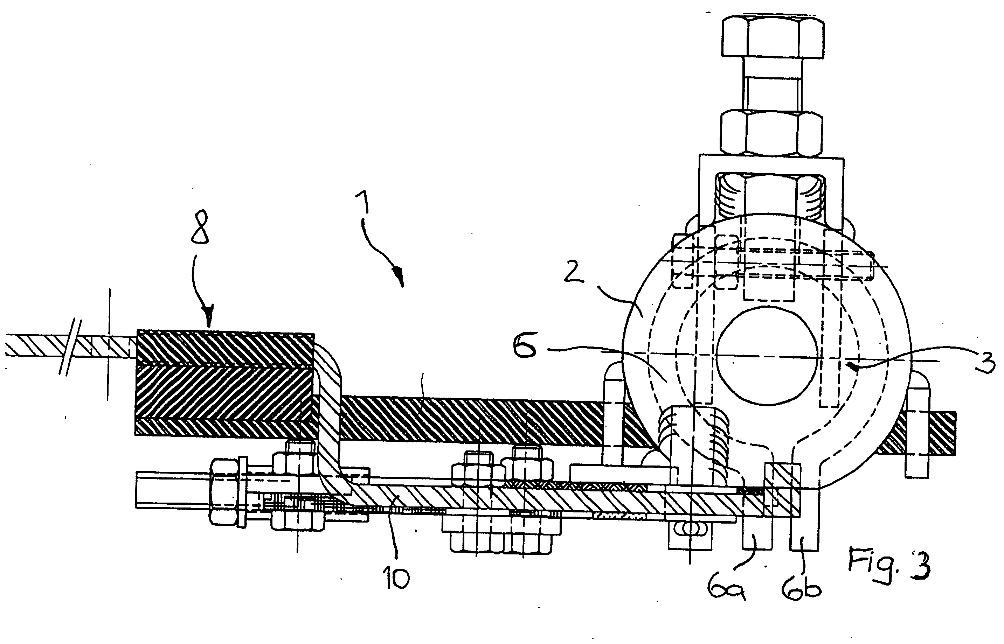

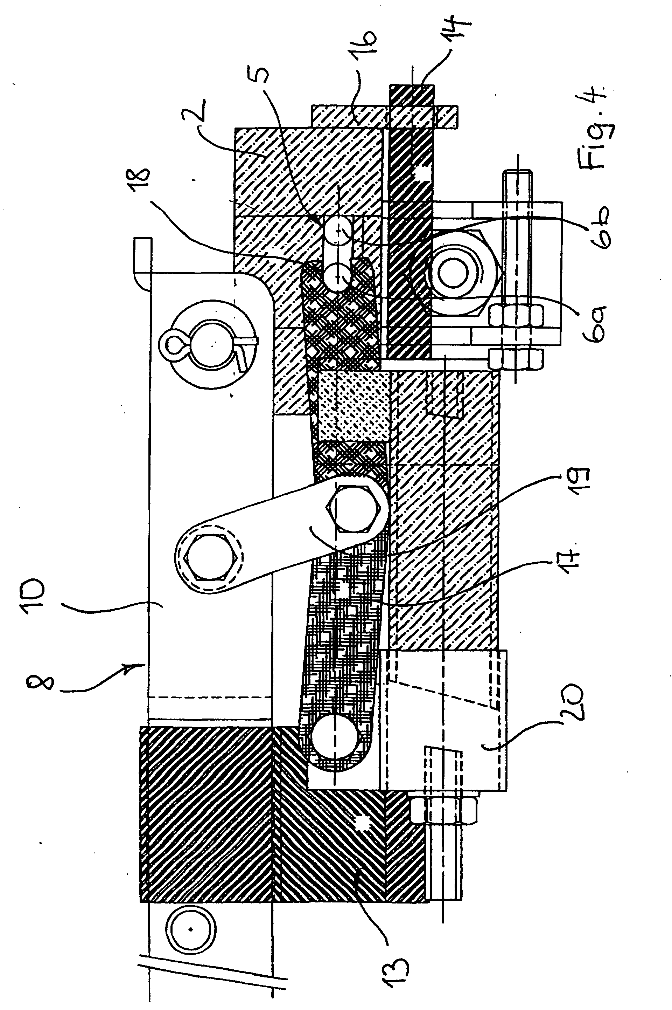

In den Figuren 3 und 4 ist eine weitere Ausführungsform einer erfindungsgemäßen Anschlußeinrichtung 1 dargestellt. Die Anschlußeinrichtung 1 umfaßt auch hier einen am Tragrahmen eines Hecklastenträgers vorgesehenen Anschlußkörper 2 mit einer Aufnahme 3, der auf einen Anschlußkopf 4 einer fahrzeugseitigen Anhängerkupplung aufgesetzt werden kann. Zur Fixierung des Anschlußkopfes 4 ist ein offener Haltering 6 vorgesehen, der in den Anschlußkörper 2 eingelegt ist und zwei im wesentlichen radial und parallel zueinander aus dem Anschlußkörper 2 herausragende Endabschnitte 6a, 6b besitzt. Der Haltering 6 hat im unbelasteten Zustand einen Durchmesser, der den Durchmesser des Anschlußkopfes 4 übersteigt, wobei die beiden aus dem Anschlußkörper 2 herausragenden Endabschnitte 6a, 6b des Halterings 6 durch einen Hebelmechanismus 8 zusammengedrückt werden können, um auf diese Weise den Anschlußkopf 4 festzuklemmen und in der Aufnahme 3 zu fixieren.

Bei der zweiten Ausführungsform besitzt der Hebelmechanismus 8, der auch hier in vertikaler Richtung schwenkbare Elemente hat, einen Betätungshebel 10, der an seinem einen Endbereich an den Anschlußkörper 2 angelenkt ist. Des weiteren gehört zu dem Hebelmechanismus 8 ein Klemmhebel 17, der an seinem einen Ende eine Ausnehmung 18 besitzt, die den ersten Endabschnitt 6a des Halterings 6 umgreift, und der an seinem anderen Ende an einem tragrahmenfesten Bauteil 20 schwenkbar gelagert ist. Der Betätigungshebel 10 und der Klemmhebel 17 sind durch einen Zwischenhebel 19 gelenkig miteinander verbunden. Konkret ist der Zwischenhebel 19 mit dem Betätigungshebel 10 sowie dem Klemmhebel 17 jeweils verschraubt, wobei eine relative Verdrehbarkeit der Bauteile 10, 17, 19 zueinander sichergestellt ist.

Das tragrahmenfeste Bauteil 20, an welchem der Klemmhebel angelenkt ist, ist als Stellelement 20 ausgebildet, das zur Einstellung der Klemmkraft des Halterings 6 zum Anschlußkörper 2 hin und von diesem weg bewegbar an den Tragrahmen des Hecklastenträgers gehalten ist.

Die Figuren 3 und 4 zeigen die Klemmstellung des Systems, in welcher sich der Betätigungshebel 10 in seiner abgesenkten, etwa horizontalen Lage befindet, so daß der Klemmhebel 17 den ersten Endabschnitt 6a gegen den am Anschlußkörper 2 abgestützten zweiten Endabschnitt 6b des Halterings 6 drückt, wodurch dieser einen in der Aufnahme 3 positionierten Anschlußkopf 4 festklemmt. Zum Lösen dieser Verbindung kann der Betätigunghebel 10 im Uhrzeigersinn hochgeschwenkt werden, wodurch der Klemmhebel 17 von dem zweiten Endabschnitt 6b wegbewegt wird, so daß sich der Haltering 6 elastisch aufweiten kann.

Der Hebelmechanismus 8 ist dabei so konstruiert, daß der erste Endabschnitt 6a zumindest über einen großen Schwenkbereich des Betätigungshebels 10 in Eingriff mit der Ausnehmung 8 bleibt und so ein flächiger Kontakt zwischen Klemmhebel 17 und Haltering 6 gewährleistet wird. Um dies zu erreichen, liegen die Schwenkachse X des Klemmhebels 17 und die Endabschnitte 6a, 6b des Halterings 6 im wesentlichen in einer horizontalen Ebene und liegt der Anlenkpunkt des zwischenhebels 19 an dem Klemmhebel 17 unterhalb dieser Ebene und in Richtung des Anschlußkörpers 2 versetzt zu dem Anlenkpunkt des Zwischenhebels 19 an dem Betätigungshebel 10.

Auch bei dieser Ausführungsform ist eine Sicherungseinrichtung 13 mit einem am Betätigungshebel 10 verschiebbar gehaltenen Riegel 14, der in der abgesenkten Stellung des Betätigungshebels 10 in Eingriff mit zwei an der Unterseite des Anschlußkörpers 2 vorgesehenen Ansätzen 15, 16 bringbar ist, vorgesehen.

## Patentansprüche

1. Hecklastenträger zur Montage an einem Kraftfahrzeug mit einem Tragrahmen, der eine Anschlußeinrichtung (1) zur Befestigung an einer fahrzeugseitigen Anhängerkupplung aufweist, wobei die Anschlußeinrichtung (1) einen Anschlußkörper (2), der eine Aufnahme (3) für einen Anschlußkopf (4) der fahrzeugseitigen Anhängerkupplung bildet, und Haltemittel (6) mit einer Betätigungs einrichtung (8), um den in der Aufnahme (3) positionierten Anschlußkopf (4) in der Aufnahme (3) zu fixieren, aufweist, **dadurch gekennzeichnet, daß** als Haltemittel ein offener Haltering (6) vorgesehen ist, der in eine die Aufnahme (3) umgebende und zu dieser offene Ausnehmung (7) eingelegt ist und mittels der Betätigungseinrichtung (8) zwischen einer Klemmstellung, in der er in die Aufnahme hineinragt, um den Anschlußkopf (4) zu fixieren, und einer Einschubstellung, in der er gegenüber der Klemmstellung derart aufgeweitet ist, daß der Anschlußkopf (4) in die Aufnahme (3) eingesetzt oder aus dieser entfernt werden kann, elastisch verformbar ist.

2. Hecklastenträger nach Anspruch 1, **dadurch gekennzeichnet, daß** die Endabschnitte (6a, 6b) des offenen Halterings (6) im wesentlichen radial aus dem Anschlußkörper (2) herausgebogen sind.

3. Hecklastenträger nach Anspruch 2, **dadurch gekennzeichnet, daß** die Betätigungseinrichtung (8) an einem ersten (6a) der beiden aus dem Anschlußkörper (2) herausragenden Endabschnitte des Halterings (6) angreift und der zweite Endabschnitt (6b) an einer Anschlagfläche des Anschlußkörpers (2) abgestützt ist.

4. Hecklastenträger nach Anspruch 3, **dadurch gekennzeichnet, daß** der zweite Endabschnitt (6b) des Halterings (6) an einem Anschlag (9) anliegt, der zur Einstellung der Haltekraft des Halterings (6) verstellbar in dem Anschlußkörper (2) gehalten ist.

5. Hecklastenträger nach Anspruch 4, **dadurch gekennzeichnet, daß** der Anschlag (9) mittels einer Stellschraube positionierbar ist.

6. Hecklastenträger nach einem der vorherigen Ansprüche, **dadurch gekennzeichnet, daß** die Betätigungseinrichtung (8) einen Betätigungshebel (10) aufweist, der an seinem einen Endbereich an dem Anschlußkörper (2) oder anschlußkörpernah an einem tragrahmenfesten Bauteil angelenkt ist und einen Ansatz (11) trägt, der im wesentlichen unbeweglich mit dem Betätigungshebel (10) verbunden ist und eine Kontaktfläche (12) besitzt, die mit dem ersten Endabschnitt (6a) des Halterings (6) in Kontakt bringbar ist und diesen bei einer Schwenkbewegung des Betätigungshebels (10) in einer Richtung zu dem zweiten Endabschnitt (6b) hin drückt, um den Haltering (6) in seine Klemmstellung zu bringen.

7. Hecklastenträger nach Anspruch 6, **dadurch gekennzeichnet, daß** der Ansatz (11) an dem Betätigungshebel (10) angeschraubt und durch einen weiteren am Betätigungshebel fixierten Hebel gegen Verdrehen gesichert ist.

8. Hecklastenträger nach einem der Ansprüche 1 bis 5, **dadurch gekennzeichnet, daß** die Betätigungseinrichtung (8) einen Betätigungshebel (10), der an seinem einen Endbereich am Anschlußkörper (2) oder anschlußkörpernah an einem tragrahmenfesten Bauteil angelenkt ist, einen Klemmhebel (17), der an seinem einen Ende eine Ausnehmung (18) aufweist, in die der erste Endabschnitt (6a) des Halterings (6) eingreift, und im Bereich seines anderen Endes an einem tragrahmenfesten Bauteil schwenkbar gehalten ist, und einen Zwischenhebel (19), der den Betätigungshebel (10) und den Klemmhebel (17) gelenkig derart miteinander verbindet, daß bei einer Schwenkbewegung des Betätigungshebels (10) in der einen Richtung der erste Endabschnitt (6a) des Halterings (6) in Richtung des zweiten Endabschnitts (6b) gedrückt wird, um den Haltering (6) in seine Klemmstellung zu bringen.

9. Hecklastenträger nach Anspruch 8, **dadurch gekennzeichnet, daß** die Schwenkachse (X) des Klemmhebels (17) und die Endabschnitte (6a, 6b) des Halterings (6) im wesentlichen in einer insbesondere horizontalen Ebene liegen und der Anlenkpunkt des Zwischenhebels (19) an dem Klemmhebel (17) beabstandet von dieser Ebene ist.

10. Hecklastenträger nach Anspruch 9, **dadurch gekennzeichnet, daß** der Abstand zwischen dem Anlenkpunkt des Klemmhebels (17) und dem zweiten Endabschnitt (6b) des Halterings (6) einstellbar ist, um die Haltekraft des Halterings (6) einzustellen.

11. Hecklastenträger nach Anspruch 10, **dadurch gekennzeichnet, daß** der Klemmhebel (17) an einem Stellelement (20) schwenkbar angebracht ist, das verstellbar an einem tragrahmenfesten Bauteil gehalten ist.

12. Hecklastenträger nach einem der Ansprüche 6 bis 11, **dadurch gekennzeichnet, daß** die Hebel (10, 17, 19) der Betätigungseinrichtung (8) im wesentlichen in vertikaler Richtung verschwenkbar sind.

13. Hecklastenträger nach einem der vorherigen Ansprüche, **dadurch gekennzeichnet, daß** eine Sicherungseinrichtung (13) vorgesehen ist, um den Betätigungshebel (10) in seiner abgeenkten Lage zu arretieren.

14. Hecklastenträger nach Anspruch 13, **dadurch gekennzeichnet, daß** die Sicherungseinrichtung (13) einen Sicherungsriegel (14) umfaßt, der an dem Betätigungshebel (10) verschiebbar geführt ist und in der abgesenkten Lage des Betätigungshebels in wenigstens eine tragrahmenfeste Aufnahme einfahrbar ist.

15. Hecklastenträger nach einem der vorherigen Ansprüche, **dadurch gekennzeichnet, daß** an dem Tragrahmen wenigstens eine Abstützeinrichtung zur zusätzlichen Abstützung an einem Kraftfahrzeug vorgesehen ist.

## Claims

1. Load carrier for mounting at the rear of a motor vehicle, with a support frame which has a connection device (1) for attachment to a vehicle-side trailer hitch, wherein the connection device (1) has a connection body (2) forming a socket (3) for a coupling head (4) of the vehicle-side trailer hitch, and retaining means (6) with an actuation device (8) to fix the coupling head (4) inside the socket (3) when positioned inside the socket (3), **characterized in that** an open retaining ring (6) is provided as retaining means which is inserted into a recess (7) surrounding the socket (3) and open towards the latter, and is elastically deformable by means of the actuation device (8) between a clamping position in which it projects into the socket to fix the coupling head (4), and an insertion position in which it is splayed with respect to the clamping position so that the coupling head (4) can be inserted into the socket (3) or removed therefrom.

2. Rear load carrier according to Claim 1, **characterized in that** the end portions (6a, 6b) of the open retaining ring (6) are bent substantially radially outwards from the connection body (2).

3. Rear load carrier according to Claim 2, **characterized in that** the actuation device (8) engages a first (6a) of the two end portions of the retaining ring (6) projecting out of the connection body (2) and the second end portion (6b) bears on a stop face of the connection body (2).

4. Rear load carrier according to Claim 3, **characterized in that** the second end portion (6b) of the retaining ring (6) bears on a stop (9) which is held positionably in the connection body (2) for adjusting the holding force of the retaining ring (6).

5. Rear load carrier according to Claim 4, **characterized in that** the stop (9) is positionable by means of an adjusting screw.

6. Rear load carrier according to any one of the preceding claims, **characterized in that** the actuation device (8) has an actuating lever (10) which is linked at one end region to the connection body (2) or, near the connection body, to a component fixed with respect to the support frame and carries an extension (11) which is substantially immovably connected to the actuating lever (10) and has a contact face (12) that can be brought into contact with the first end portion (6a) of the retaining ring (6), pushing the latter, upon a pivotal movement of the actuating lever (10), in a direction towards the second end portion (6b) in order to shift the retaining ring (6) into its clamping position.

7. Rear load carrier according to Claim 6, **characterized in that** the extension (11) is bolted to the actuating lever (10) and is secured against turning by a further lever fixed to the actuating lever.

8. Rear load carrier according to any one of Claims 1 to 5, **characterized in that** the actuation device (8) [has] an actuating lever (10) which is linked at one end region to the connection body (2) or, near the connection body, to a component fixed with respect to the support frame; a clamping lever (17) which has at one end a recess (18) into which the first end portion (6a) of the retaining ring (6) engages, and is pivotably held in the region of its other end on a component fixed with respect to the support frame; and an intermediate lever (19) linking the actuating lever (10) and the clamping lever (17) to each other so that upon a pivotal movement of the actuating lever (10) in one direction the first end portion (6a) of the retaining ring is pushed towards the second end portion (6b) in order to shift the retaining ring (6) into its clamping position.

9. Rear load carrier according to Claim 8, **characterized in that** the pivot axis (X) of the clamping lever (17) and the end portions (6a, 6b) of the retaining ring (6) lie substantially in one, especially horizontal, plane; and the point of attachment of the intermediate lever (19) to the clamping lever (17) lies outside this plane.

10. Rear load carrier according to Claim 9, **characterized in that** the distance between the attachment point of the clamping lever (17) and the second end portion (6b) of the retaining ring (6) is adjustable in order to adjust the holding force of the retaining ring (6).

11. Rear load carrier according to Claim 10, **characterized in that** the clamping lever (17) is mounted pivotably on an adjusting element (20) which is held positionably on a component fixed with respect to the support frame.

12. Rear load carrier according to any one of Claims 6 to 11, **characterized in that** the levers (10, 17, 19) of the actuation device (8) are pivotable substantially in a vertical direction.

13. Rear load carrier according to any one of the preceding claims, **characterized in that** a locking device (13) is provided to lock the actuating lever (10) in its [lowered] position.

14. Rear load carrier according to Claim 13, **characterized in that** the locking device (13) comprises a locking bolt (14) displaceably guided on the actuating lever (10) and shootable into at least one seat fixed with respect to the support frame in the lowered position of the actuating lever.

15. Rear load carrier according to any one of the preceding claims, **characterized in that** at least one stay device is provided on the support frame to give extra support on a motor vehicle.

## Revendications

1. Dispositif porte-charge destiné à être monté à l'arrière d'un véhicule automobile, comportant un cadre de support muni d'un dispositif de raccordement (1) en vue de la fixation à un accouplement de remorque solidaire du véhicule, ledit dispositif de raccordement (1) comprenant un corps de rattachement (2) qui forme un logement (3) affecté à une tête de raccordement (4) de l'accouplement de remorque solidaire du véhicule, et des moyens de retenue (6), avec un dispositif d'actionnement (8) en vue de consigner à demeure, dans le logement (3), la tête de raccordement (4) positionnée dans ledit logement (3), **caractérisé par le fait qu'**il est prévu, en tant que moyen de retenue, une bague d'arrêt (6) ouverte qui est logée dans un évidement (7) entourant le logement (3) et ouvert en direction de ce dernier, et qui est élastiquement déformable, au moyen du dispositif d'actionnement (8), entre une position de coincement dans laquelle elle s'engage dans le logement, afin de verrouiller la tête de raccordement (4), et une position d'insertion dans laquelle elle est élargie, par rapport à la position de coincement, de façon telle que la tête de raccordement (4) puisse être introduite dans le logement (3), ou être extraite de celui-ci.

2. Dispositif porte-charge selon la revendication 1, **caractérisé par le fait que** les régions extrêmes (6a, 6b) de la bague d'arrêt (6) ouverte sont coudées vers l'extérieur du corps de rattachement (2), pour l'essentiel dans le sens radial.

3. Dispositif porte-charge selon la revendication 2, **caractérisé par le fait que** le dispositif de fixation (8) vient en prise avec une première (6a) des deux régions extrêmes de la bague d'arrêt (6) saillant au-delà du corps de rattachement (2), et la seconde région extrême (6b) est en appui contre une surface de butée dudit corps de rattachement (2).

4. Dispositif porte-charge selon la revendication 3, **caractérisé par le fait que** la seconde région extrême (6b) de la bague d'arrêt (6) est appliquée contre une butée (9) qui, en vue du réglage de la force d'arrêt de ladite bague d'arrêt (6), est retenue avec mobilité dans le corps de rattachement (2).

5. Dispositif porte-charge selon la revendication 4, **caractérisé par le fait que** la butée (9) peut être positionnée au moyen d'une vis de réglage.

6. Dispositif porte-charge selon l'une des revendications précédentes, **caractérisé par le fait que** le dispositif d'actionnement (8) présente un levier d'actionnement (10) qui est articulé sur le corps de rattachement (2) par l'une de ses régions extrêmes ou, à proximité dudit corps de rattachement, sur une pièce structurelle assujettie au cadre de support ; et qui porte un appendice (11) relié audit levier d'actionnement (10), pour l'essentiel sans faculté de mouvement, et possédant une surface de contact (12) qui peut être mise en contact avec la première région extrême (6a) de la bague d'arrêt (6) et pousse cette dernière en direction de la seconde région extrême (6b), lors d'un mouvement pivotant du levier d'actionnement (10), afin d'amener ladite bague d'arrêt (6) à sa position de coincement.

7. Dispositif porte-charge selon la revendication 6, **caractérisé par le fait que** l'appendice (11) est rapporté par vissage sur le levier d'actionnement (10), et est empêché de tourner par l'intermédiaire d'un autre levier verrouillé à demeure sur ledit levier d'actionnement.

8. Dispositif porte-charge selon l'une des revendications 1 à 5, **caractérisé par le fait que** le dispositif d'actionnement (8) comprend un levier d'actionnement (10) qui est articulé sur le corps de rattachement (2) par l'une de ses régions extrêmes ou, à proximité dudit corps de rattachement, sur une pièce structurelle assujettie au cadre de support ; un levier de coincement (17) qui comporte, à l'une de ses extrémités, un évidement (18) dans lequel pénètre la première région extrême (6a) de la bague d'arrêt (6), et est retenu à pivotement, dans la région de son autre extrémité, sur une pièce structurelle assujettie au cadre de support ; et un levier intermédiaire (19) assurant la solidarisation mutuelle articulée du levier d'actionnement (10) et du levier de coincement (17), de façon telle que, lors d'un mouvement pivotant dudit levier d'actionnement (10) dans l'une des directions, la première région extrême (6a) de la bague d'arrêt (6) soit poussée en direction de la seconde région extrême (6b), afin d'amener ladite bague d'arrêt (6) à sa position de coincement.

9. Dispositif porte-charge selon la revendication 8, **caractérisé par le fait que** l'axe de pivotement (X) du levier de coincement (17) et les régions extrêmes (6a, 6b) de la bague d'arrêt (6) se trouvent, pour l'essentiel, dans un plan notamment horizontal ; et le point d'articulation du levier intermédiaire (19) sur ledit levier de coincement (17) se situe à distance de ce plan.

10. Dispositif porte-charge selon la revendication 9, **caractérisé par le fait que** la distance, comprise entre le point d'articulation du levier de coincement (17) et la seconde région extrême (6b) de la bague d'arrêt (6), est réglable en vue du réglage de la force d'arrêt de la bague d'arrêt (6).

11. Dispositif porte-charge selon la revendication 10, **caractérisé par le fait que** le levier de coincement (17) est monté pivotant sur un élément de réglage (20) retenu, avec mobilité, sur une pièce structurelle assujettie au cadre de support.

12. Dispositif porte-charge selon l'une des revendications 6 à 11, **caractérisé par le fait que** les leviers (10, 17, 19) du dispositif d'actionnement (8) peuvent pivoter pour l'essentiel dans le sens vertical.

13. Dispositif porte-charge selon l'une des revendications précédentes, **caractérisé par le fait qu'**un dispositif de blocage (13) est prévu pour arrêter le levier d'actionnement (10) dans sa position abaissée.

14. Dispositif porte-charge selon la revendication 13, **caractérisé par le fait que** le dispositif de blocage (13) englobe un verrou de blocage (14) qui est guidé à coulissement sur le levier d'actionnement (10) et qui, dans la position abaissée dudit levier d'actionnement, peut être introduit dans au moins un logement assujetti au cadre de support.

15. Dispositif porte-charge selon l'une des revendications précédentes, **caractérisé par le fait qu'**au moins un dispositif d'appui est prévu, sur le cadre de support, pour assurer l'appui supplémentaire sur un véhicule automobile.
